# EUROPÄISCHE PATENTANMELDUNG

(11) **EP 1 760 341 A2**
(43) Veröffentlichungstag der Anmeldung: **07.03.2007**
(21) Anmeldenummer: 06119435.3
(22) Anmeldetag: 24.08.2006
(51) Int. Cl.: F16C 29/04, F16C 33/38

(54) **Flachführung mit Hubverlängerung**

(30) Priorität: 29.08.2005 DE 102005040891
(71) Anmelder: SIEMENS AKTIENGESELLSCHAFT, 80333 München (DE)
(72) Erfinder: Reimann, Günter, 81375, München (DE)

(57) **Zusammenfassung**

Ein Kugelkäfig (1) für eine Linear-Flachführung (11) mit einem Führungswagen (12) und einem Führungsschlitten (16), welche relativ zueinander in einer Verschieberichtung verschiebbar sind, umfasst eine erste Wand (2) mit zumindest zwei Aufnahmen (3) für je eine Kugel (8-1), wobei jede Aufnahme zwei in der ersten Wand (2) ausgebildete Öffnungen (6-1) und ein die Öffnungen (6-1) verbindendes Durchgangsloch (7-1) aufweist und derart ausgebildet ist, dass eine in der Aufnahme angeordnete Kugel (8-1) aus beiden Öffnungen (6-1) herausragt, wobei der Kugelkäfig (1) derart ausgebildet ist, dass er so zwischen dem Führungswagen (12) und dem Führungsschlitten (16) angeordnet werden kann, dass die Aufnahmen (3) in der Verschieberichtung hintereinander liegen und darin angeordnete Kugeln (8-1) jeweils mit dem Führungswagen (12) und dem Führungsschlitten (16) in Kontakt stehen, sodass das Verschieben des Führungsschlittens relativ zum Führungswagen (12) unter Drehung der Kugeln (8-1) geschieht, und wobei zumindest eine der Aufnahmen (3) Rückhaltemittel (10) aufweist, welche eine in der Aufnahme angeordnete Kugel (8-1) zumindest auf Seiten einer der beiden Öffnungen (6-1) am Herausfallen hindern.

## Beschreibung

Die Erfindung betrifft einen Kugelkäfig für eine Flachführung, eine Flachführung mit einem derartigen Kugelkäfig sowie einen Bestückkopf zum Bestücken von Substraten mit elektrischen Bauteilen, welcher eine derartige Flachführung aufweist.

Aus dem Stand der Technik sind kugelgelagerte Linear-Flachführungen bekannt, welche einen Führungswagen und eine Führungsschiene aufweisen. Zwischen der Führungsschiene und dem Führungswagen sind Kugellagerkugeln vorgesehen, so dass die Führungsschiene relativ zu dem Führungswagen unter Drehung der Kugeln verschiebbar ist. Die Kugellagerkugeln werden durch den beidseitigen Kontakt mit dem Führungswagen und der Führungsschiene in der Flachführung gehalten. Aufgrund dieser Konstruktion ist der maximale Hub der Flachführung eingeschränkt. Größere Hübe können nur mit größeren Flachführungen realisiert werden, welche jedoch einen größeren Einbauraum benötigen. Bei bestimmten technischen Vorrichtungen, beispielsweise bei einem Bestückkopf zum Bestücken von Substraten mit elektrischen Bauteilen, ist der Einbauraum für solche Flachführungen stark begrenzt. Zur Durchführung bestimmter Sonderanwendungen ist jedoch ein größerer Hub erforderlich, als er durch die in diesem begrenzten Einbauraum anbringbaren Flachführungen aus dem Stand der Technik erreichbar wäre.

Es ist deshalb die Aufgabe der vorliegenden Erfindung, einen Kugelkäfig für eine Flachführung, eine Flachführung sowie einen Bestückkopf mit einer derartigen Flachführung zu liefern, bei welchen der maximale Hub der Flachführung bei gleichem Einbauraum größer ist als der durch die bisher bekannten Flachführungen erreichbare Hub.

Diese Aufgabe wird durch den Kugelkäfig, die Flachführung und dem Bestückkopf gemäß der unabhängigen Ansprüche gelöst. Vorteilhafte Ausgestaltungen sind Gegenstand der Unteransprüche.

Der Kugelkäfig gemäß dem Anspruch 1 eignet sich für eine Linear-Flachführung mit einem Führungswagen und einer Führungsschiene, welche relativ zueinander in einer Verschieberichtung verschiebbar sind. Der erfindungsgemäße Kugelkäfig weist eine erste Wand mit zumindest zwei Aufnahmen für je eine Kugel auf, wobei jede Aufnahme zwei in der ersten Wand ausgebildete Öffnungen und ein die beiden Öffnungen verbindendes Durchgangsloch aufweist und derart ausgebildet ist, dass eine in der Aufnahme angeordnete Kugel aus beiden Öffnungen herausragt. Der Kugelkäfig ist ferner derart ausgebildet, dass er so zwischen dem Führungswagen und dem Führungsschlitten angeordnet werden kann, dass die Aufnahmen in der Verschieberichtung hintereinander liegen und die darin angeordneten Kugeln jeweils mit dem Führungswagen und dem Führungsschlitten derart in Kontakt stehen, dass das Verschieben des Führungsschlittens relativ zu dem Führungswagen unter Drehung der Kugeln geschieht. Erfindungsgemäß weist zumindest eine der Aufnahmen Rückhaltemittel auf, welche eine in dieser Aufnahme angeordnete Kugel zumindest auf Seiten einer der beiden Öffnungen am Herausfallen hindert. Durch den Einsatz des erfindungsgemäßen Kugelkäfigs in einer Flachführung ist es deshalb möglich, den maximalen Hub der Linear-Flachführung gegenüber dem Hub der aus dem Stand der Technik bekannten Flachführungen bei gleichem Einbauraum erheblich zu erweitern, da die Kugellagerkugeln durch die Rückhaltemittel selbst dann sicher in den Aufnahmen gehalten werden, wenn die Kugeln nicht mehr durch beidseitigen Kontakt mit dem Führungswagen und der Führungsschiene in der Flachführung gehalten werden.

Der Kugelkäfig kann gemäß Anspruch 2 elastisches Material ausweisen. Das Durchgangsloch jeder Aufnahme weist einen Innenbereich bzw. Kugelsitz auf, welcher sich zwischen den beiden Öffnungen der jeweiligen Aufnahme befindet und in dem eine darin angeordnete Kugel frei drehbar ist. Zumindest eine Öffnung der die Rückhaltemittel aufweisenden Aufnahmen ist so schmal ausgebildet, dass die in diesen Aufnahmen angeordneten Kugeln die jeweilige Öffnung nur unter elastischer Deformation des diese Öffnung umgebenden elastischen Materials durchqueren kann. Durch diese Ausgestaltung des Kugelkäfigs ist es möglich, die Kugellagerkugeln, z.B. per Hand, unter Deformation des die Öffnungen der Aufnahmen umgebenden elastischen Materials in den Innenbereich der Aufnahme hinein oder aus diesem heraus zu drücken. Das elastische Material ist dabei so gewählt und die Rückhaltemittel sind so ausgebildet, dass die Kraft, welche aufzuwenden ist, um das die Öffnung der Aufnahme umgebende elastische Material soweit zu deformieren, dass die Kugel die Aufnahme der Öffnung verlässt, bei normalem Betrieb der Linear-Flachführung jedoch nicht überschritten wird, so dass die Kugeln auch sicher in der Aufnahme durch die Rückhaltemittel verbleiben und am Herausfallen gehindert werden. Gleichzeitig ist jedoch eine einfache Montage des Kugelkäfigs durch einfaches Eindrücken bzw. Herausdrücken der Kugellagerkugeln in die bzw. aus den Aufnahmen möglich.

Gemäß einer Ausgestaltung des Kugelkäfigs nach Anspruch 3 ist dieser als Spritzgussteil aus Kunststoff gefertigt. Dies ermöglicht eine kostengünstige und einfache Fertigung.

Für bestimmte Anwendungen kann es notwendig sein, dass der Kugelkäfig gemäß der Ausgestaltung nach Anspruch 4 starres Material, beispielsweise Metall, aufweist. Das Durchgangsloch jeder Aufnahme weist einen Innenbereich als Kugelsitz auf, welcher sich zwischen den beiden Öffnungen der jeweiligen Aufnahme befindet und in dem eine darin angeordnete Kugel frei drehbar ist. Nur jeweils eine Öffnung derjenigen Aufnahmen, welche Rückhaltemittel aufweisen, ist so schmal ausgebildet, dass die in dieser Aufnahme angeordnete Kugel diese Öffnung nicht durchqueren kann. Im Unterschied zu der Ausgestaltung, bei welcher der Kugelkäfig elastisches Material aufweist, können die Kugellagerkugeln die Öffnungen mit den Rückhaltemitteln aus starrem Material nicht durch elastische Deformation verlassen. Zu Montagezwecken ist es deshalb notwendig, dass nur eine Öffnung der Aufnahmen ein derartiges starres Rückhaltemittel aufweist, so dass die darin angeordneten Kugeln die Aufnahme auf Seiten der Öffnung, welche die Rückhaltemittel aufweist, nicht verlassen kann, jedoch über die andere Öffnung, welche keine Rückhaltemittel aufweist, einfach in die Aufnahme eingebracht und aus dieser entnommen werden kann. Ein derartig ausgebildeter Kugelkäfig eignet sich für Anwendungen in Linear-Flachführungen, bei denen die Kugeln bei Maximalhub nur auf der Seite nicht mit dem Führungswagen oder dem Führungsschlitten in Kontakt steht, auf welcher die entsprechende Aufnahme Rückhaltemittel aufweist.

Gemäß einer Ausgestaltung des Kugelkäfigs nach Anspruch 5 weist ein Querschnitt der ersten Wand seitliche Ausbuchtungen auf und der Querschnitt ist derart ausgebildet, dass der Kugelkäfig so zwischen dem Führungswagen und dem Führungsschlitten angeordnet werden kann, dass die Ausbuchtungen in eine Führungsnut auf Seiten des Führungswagens und eine weitere Führungsnut des Führungsschlittens hineinragen, wobei die Ausbuchtungen den Führungswagen oder den Führungsschlitten nicht berühren. Vorteilhafterweise füllen die Ausbuchtungen die Führungsnut auf Seiten des Führungswagens und die weitere Führungsnut auf Seiten des Führungsschlittens soweit aus, dass die Ausbuchtungen den Führungswagen und den Führungsschlitten gerade nicht berühren. Dadurch wird verhindert, dass sich Schmutzpartikel in den Führungsnuten ansammeln oder in den Bereich der Aufnahmen bzw. der Kugellagerkugeln gelangen. Bei Längsverschiebung der Ausbuchtungen in der Verschieberichtung werden in den Führungsnuten vorhandene Schmutzpartikel durch Ausbuchtungen aus den Führungsnuten herausgeräumt. Somit werden die Betriebssicherheit und die Dauerhaltbarkeit der Flachführung deutlich gesteigert.

Gemäß dem Anspruch 6 ist der Kugelkäfig derart weiter ausgebildet, dass er in einem von dem Führungswagen ausgebildeten ersten Aufnahmeraum angeordnet werden kann. Der Kugelkäfig umfasst ferner eine zweite Wand auf, welche zumindest zwei weitere Aufnahmen für je eine weitere Kugel aufweist, wobei jede der weiteren Aufnahmen zwei in der zweiten Wand ausgebildete weitere Öffnungen und ein die weiteren Öffnungen verbindendes weiteres Durchgangsloch aufweist. Jede der weiteren Aufnahmen ist derart ausgebildet, dass eine in dieser weiteren Aufnahme angeordnete weitere Kugel aus beiden weiteren Öffnungen herausragt. Der Kugelkäfig weist ferner einen zweiten Aufnahmeraum zur Aufnahme des Trägerschlittens auf, wobei der zweite Aufnahmeraum durch die erste und die zweite Wand begrenzt ist. Der Kugelkäfig ist derart ausgebildet, dass er so zwischen dem Führungswagen und dem Führungsschlitten angeordnet werden kann, dass die Aufnahmen der ersten Wand und die weiteren Aufnahmen der zweiten Wand jeweils in der Verschieberichtung hintereinander liegen und die in den Aufnahmen der ersten Wand angeordneten Kugeln und die in den weiteren Aufnahmen der zweiten Wand angeordneten weiteren Kugeln jeweils mit dem Führungswagen und dem Führungsschlitten in Kontakt stehen, so dass das Verschieben des Führungsschlittens relativ zum Führungswagen unter Drehung der Kugeln und der weiteren Kugeln geschieht. Die Aufnahmen und die weiteren Aufnahmen weisen jeweils Rückhaltemittel auf, welche die in der Aufnahme und der weiteren Aufnahme jeweils angeordneten Kugeln und weiteren Kugeln zumindest auf der Seite einer der Öffnungen und der weiteren Öffnungen am Herausfallen hindern. Ein derartig ausgebildeter Kugelkäfig ist für den Einsatz in Flachführungen geeignet, in welchen der Führungsschlitten innerhalb des durch den Kugelkäfig ausgebildeten zweiten Aufnahmeraum verläuft, wobei der Kugelkäfig selbst in dem ersten Aufnahmeraum, welcher durch den Führungswagen ausgebildet ist, angeordnet ist. Eine derartige Flachführung zeichnet sich durch Kompaktheit, stabile Führungseigenschaften und hohe Betriebssicherheit aus.

Gemäß dem Anspruch 7 weisen die Querschnitte der ersten Wand und der zweiten Wand seitliche Ausbuchtungen auf. Bezüglich der Ausgestaltung dieser Ausbuchtungen und deren Vorteile wird auf die Ausführungen des Anspruchs 5 verwiesen.

Eine Flachführung gemäß dem Anspruch 8 weist einen Kugelkäfig nach einem der Ansprüche 1 bis 5 auf. Der Kugelkäfig mit den in den Aufnahmen angeordneten Kugeln ist derart zwischen dem Führungswagen und dem Führungsschlitten angeordnet, dass zumindest eine Kugel mit dem Führungswagen und dem Führungsschlitten in Kontakt steht, so dass der Führungsschlitten relativ zu dem Führungswagen unter Drehung der mindestens einen Kugel in der Verschieberichtung verschiebbar ist, und dass die Aufnahmen in der Verschieberichtung hintereinander liegen. Bezüglich der Vorteile einer derartigen Flachführung wird auf die Ausführungen zum Anspruch 1 verwiesen.

Die Flachführung kann gemäß den Ansprüchen 9, 10 und 11 erste Begrenzungsmittel aufweisen, welche eine Verschiebung des Führungsschlittens relativ zu dem Kugelkäfig auf eine erste Endlage begrenzen. Bei Einnahme der ersten Endlage durch den Kugelkäfig steht ein Teil der Kugellagerkugeln, d.h. zumindest eine Kugel, nicht in Kontakt mit dem Führungsschlitten oder dem Führungswagen. Im ersten Fall weisen dabei zumindest die Aufnahmen, in welchen die Kugeln angeordnet sind, welche mit dem Führungsschlitten nicht in Kontakt stehen, auf Seiten der dem Führungsschlitten zugewandten Öffnung die Rückhaltemittel auf. Im zweiten Fall weisen zumindest die Aufnahmen, in welchen die Kugeln angeordnet sind, welche mit dem Führungswagen nicht in Kontakt stehen, auf Seiten der dem Führungswagen zugewandten Öffnung die Rückhaltemittel auf. Durch die ersten Begrenzungsmittel wird der maximale Hub insoweit begrenzt, dass bei Einstellung der ersten Endlage alle Kugeln, welche nicht beidseitig mit dem Führungswagen und dem Führungsschlitten in Kontakt stehen, in Aufnahmen mit Rückhaltemitteln angeordnet sind. Dadurch wird ein Verlust der Kugeln bei Einnahme des Maximalhubs sicher verhindert.

In einer Ausgestaltung weist die Flachführung nach den Ansprüchen 12, 13 und 14 zweite Begrenzungsmittel auf, welche eine Verschiebung des Kugelkäfigs relativ zu dem Führungswagen bis zu einer zweiten Endlage begrenzen. Auf diese Ausgestaltung sind die Ausführungen zu den Ansprüchen 9, 10 und 11 analog zu übertragen.

Ein Bestückkopf zum Bestücken von Substraten mit elektrischen Bauteilen gemäß dem Anspruch 15 weist ein Gehäuse auf, zumindest eine Flachführung nach einem der Ansprüche 8 bis 14, welche an dem Gehäuse angeordnet ist, und mindestens einen Greifer zum Handhaben der Bauteile, wobei der Greifer derart mit der Flachführung gekoppelt ist, dass er relativ zu dem Gehäuse in der Verschieberichtung verschiebbar ist. Ein Bestückkopf mit einer derartigen Flachführung kann sehr kompakt ausgeführt werden, da der Einbauraum für die Flachführungen gering gehalten werden kann. Wie schon zu Anspruch 1 näher ausgeführt, erlaubt der Einsatz einer erfindungsgemäßen Flachführung in dem Bestückkopf, dass der Maximalhub, um welchen der Greifer relativ zu dem Gehäuse verschiebbar ist, bei gleichem Einbauraum deutlich größer ist, als dies bei aus dem Stand der Technik bekannten Flachführungen möglich wäre.

Im Folgenden wird der erfindungsgemäße Kugelkäfig, die erfindungsgemäße Flachführung und der erfindungsgemäße Bestückkopf anhand jeweils eines Ausführungsbeispiels unter Bezug auf die beigefügten Figuren näher erläutert. In den Figuren sind:
Figuren 1a, 1b und 1c Darstellungen eines Ausführungsbeispiels eines erfindungsgemäßen Kugelkäfigs aus verschiedenen Perspektiven,
Figur 2a eine Seitenansicht des Kugelkäfigs,
Figur 2b eine Querschnittansicht des Kugelkäfigs in der Draufsicht entlang der Schnittlinie C-C in Fig. 2a,
Figur 2c eine Frontalansicht des in Figur 1a dargestellten Kugelkäfigs,
Figur 3 eine vergrößerte Ansicht einer Aufnahme des Kugelkäfigs,
Figuren 4a, 4b und 4c Darstellungen eines Ausführungsbeispiels der erfindungsgemäßen Flachführung aus verschiedenen Perspektiven,
Figur 5a eine Querschnittsansicht der Flachführung entlang der Schnittlinie A-A in Figur 5b,
Figur 5b eine Draufsicht der erfindungsgemäßen Flachführung,
Figur 5c eine Querschnittsdarstellung entlang der Schnittlinie B-B in Figur 5b,
Figur 6 eine schematische Darstellung eines Ausführungsbeispiels eines erfindungsgemäßen Bestückkopfes.

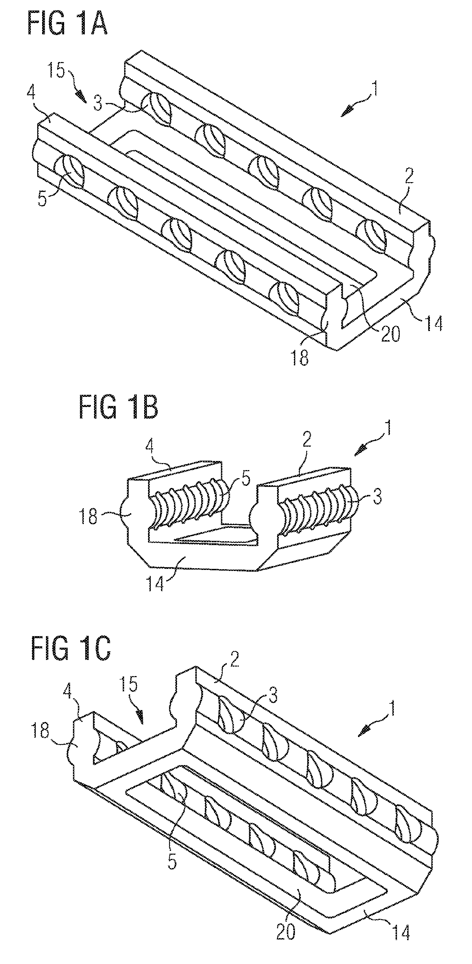

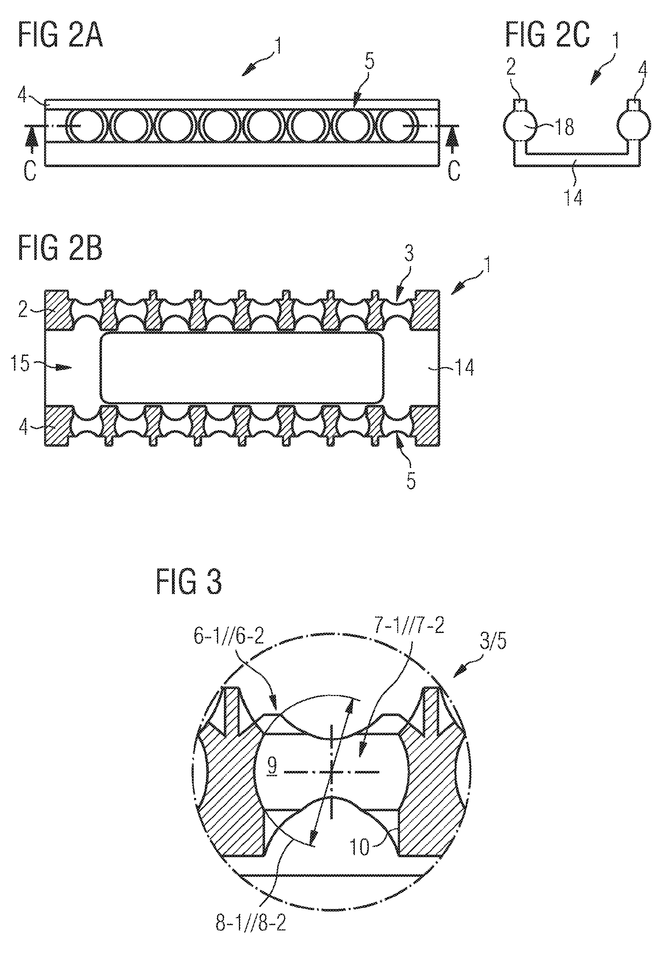

In den Figuren 1a, 1b, 1c, 2a, 2b und 2c ist ein Ausführungsbeispiel des erfindungsgemäßen Kugelkäfigs 1 für eine Linear-Flachführung aus verschiedenen Perspektiven dargestellt. Der Kugelkäfig 1 weist eine erste Wand 2 mit mehreren Aufnahmen 3 für je eine Kugel bzw. Kugellagerkugel (hier nicht dargestellt) auf. Der Kugelkäfig 1 weist ferner eine zweite Wand 4 auf, welche weitere Aufnahmen 5 für je eine weitere Kugel (hier nicht dargestellt) aufweist.

Eine derartige Aufnahme 3,5 ist vergrößert in Figur 3 dargestellt. Daraus wird deutlich, dass jede Aufnahme 3 bzw. weitere Aufnahme 5 zwei in der jeweiligen Wand ausgebildete Öffnungen 6-1 bzw. weitere Öffnungen 6-2 und ein die Öffnungen 6-1 bzw. weitere Öffnungen 6-2 verbindendes Durchgangsloch 7-1 bzw. weiteres Durchgangsloch 7-2 aufweist. Die Aufnahmen 3,5 sind derart ausgebildet, dass eine in der Aufnahme 3 bzw. weiteren Aufnahme 5 angeordnete Kugel 8-1 bzw. weitere Kugel 8-2 (in Figur 3 durch einen Teilkreis angedeutet) aus beiden Öffnungen 6-1 bzw. weiteren Öffnungen 6-2 herausragt. Jedes Durchgangsloch 7-1,7-2 weist einen Innenbereich 9 auf, welcher sich zwischen den beiden Öffnungen 6-1, 6-2 befindet und welcher als Kugelsitz derart ausgebildet ist, dass eine darin angeordnete Kugel 8-1, 8-2 frei drehbar ist. Die Aufnahmen 3,5 weisen ferner Rückhaltemittel 10 auf, welche die in der jeweiligen Aufnahme 3,5 angeordnete Kugel 8-1, 8-2 am Herausfallen auf Seiten einer der beiden Öffnungen 6-1, 6-2 hindert. Die Rückhaltemittel 10 werden im Ausführungsbeispiel dadurch realisiert, dass beide Öffnungen 6-1, 6-2 einer Aufnahme 3,5 einen kleineren Durchmesser aufweisen als der größte Durchmesser der darin angeordneten Kugel 8-1, 8-2 (siehe Figur 3).

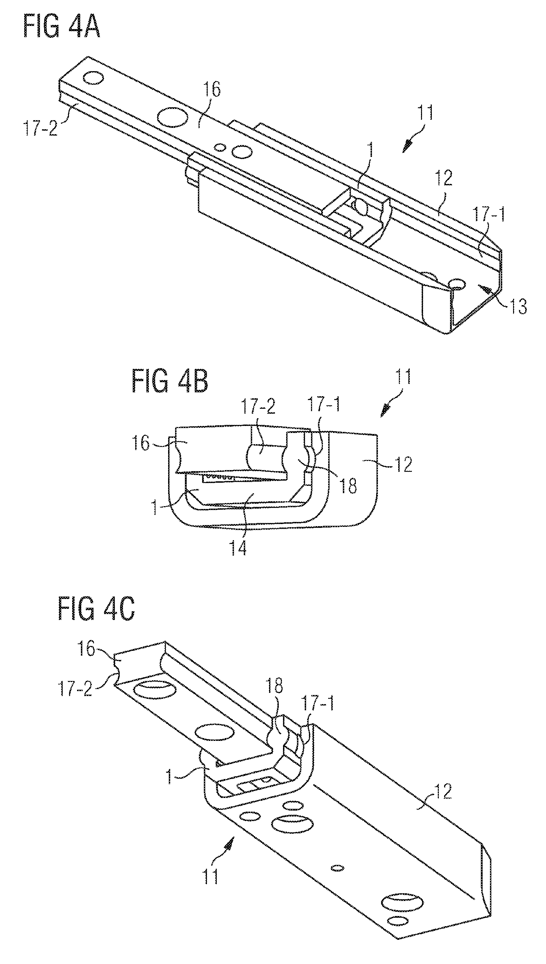

Da der Kugelkäfig 1 im Ausführungsbeispiel als Spitzgussteil aus Kunststoff gefertigt ist, kann eine Kugel 8-1, 8-2 durch elastische Deformation des die Öffnungen 6-1, 6-2 umgebende Materials in den Innenraum der Aufnahme 3,5 eingebracht oder aus diesem entfernt werden. Gleichzeitig ist der Kugelkäfig 1 bzw. die Rückhaltemittel 10 derart ausgebildet, dass die Kräfte, welche zur Deformation des die Öffnungen 6-1, 6-2 umgebenden Materials aufzubringen sind, um die Kugel 8-1, 8-2 aus der Aufnahme zu entfernen, größer sind als die beim Einsatz des Kugelkäfigs 1 in einer Flachführung 11 (siehe Figuren 4a-4c)auftretenden Kräfte. Dadurch wird ein sicherer Betrieb der Flachführung 11 gewährleistet und ein ungewolltes Herausfallen der Kugel 8-1, 8-2 aus dem Kugelsitz bzw. den Aufnahmen 3,5 verhindert.

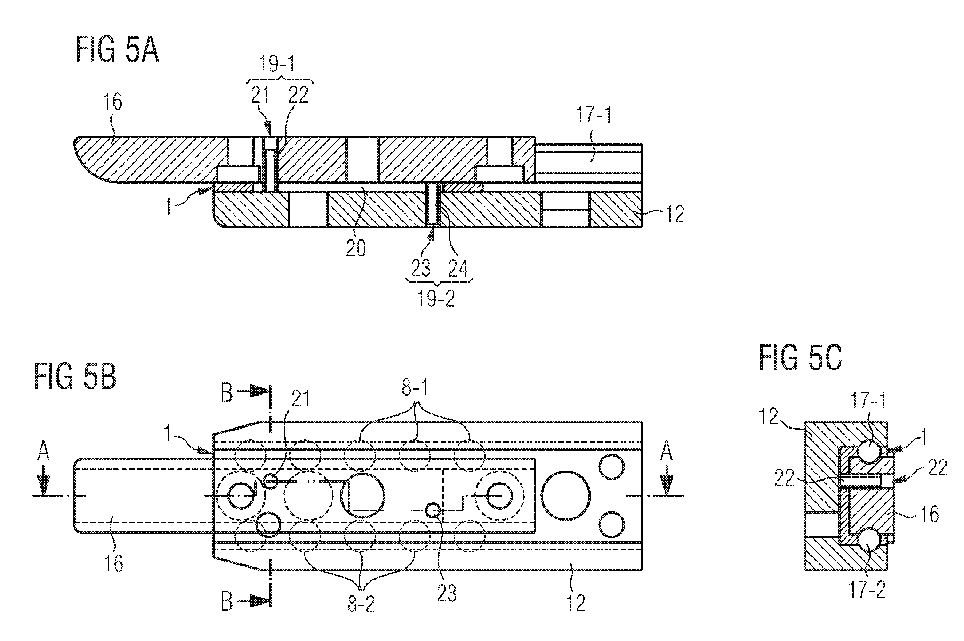

In den Figuren 4a bis 4c und 5a bis 5c ist ein Ausführungsbeispiel einer erfindungsgemäßen Flachführung 11 dargestellt. Die Flachführung 11 weist einen Führungswagen 12 mit einem ersten Aufnahmeraum 13 auf. Der erfindungsgemäße Kugelkäfig 1 ist dabei so ausgebildet, dass er in dem ersten Aufnahmeraum 13 des Führungswagens 12 angeordnet werden kann. Wie aus den Figuren 1a bis 1c deutlich wird, weist der Kugelkäfig 1 ein Bodenteil 14 auf, welches zusammen mit der ersten und der zweiten Wand 2,4 dem Kugelkäfig 1 einen im Wesentlichen U-förmigen Querschnitt verleiht und einen zweiten Aufnahmeraum 15 ausbildet, in welchem ein Führungsschlitten 16 der Flachführung 11 angeordnet werden kann. Sowohl in dem Führungsschlitten 16 als auch in dem Führungswagen 12 sind Führungsnuten 17-1 bzw. weitere Führungsnuten 17-2 für die im Kugelkäfig 1 angeordneten Kugeln 8-1, 8-2 ausgebildet. Der Kugelkäfig 1 ist dabei derart ausgebildet, dass er so zwischen dem Führungswagen 12 und dem Führungsschlitten 16 angeordnet werden kann, dass die Aufnahmen 3 der ersten Wand 2 und die weiteren Aufnahmen 5 der zweiten Wand 4 jeweils in einer Verschieberichtung (Pfeil x in Figuren 4a und 5a), in welcher der Führungswagen 12 relativ zu dem Führungsschlitten 16 verschiebbar ist, hintereinander liegen. Die in den Aufnahmen 3 der ersten Wand 2 angeordneten Kugeln 8-1 und die in den weiteren Aufnahmen 5 der zweiten Wand 4 angeordneten weiteren Kugeln 8-2 stehen jeweils auf beiden Seiten im Bereich der Führungsnuten 17-1, 17-2 mit dem Führungswagen 12 und dem Führungsschlitten 16 in Kontakt. Auf diese Weise geschieht das Verschieben des Führungsschlittens relativ zum Führungswagen 12 unter Drehung der Kugeln 8-1 und der weiteren Kugeln 8-2.

Wie insbesondere aus den Figuren 1a bis 1c deutlich wird, weist sowohl ein erster Querschnitt der ersten Wand 2 als auch ein zweiter Querschnitt der zweiten Wand 4 seitliche Ausbuchtungen 18 auf. Aus den Figuren 4b und 4c ist ersichtlich, dass die Ausbuchtungen 18 derart ausgebildet sind, dass sie in die Führungsnuten 17-1 auf Seiten des Führungswagens und in die weiteren Führungsnuten 17-2 auf Seiten des Führungsschlittens 16 hineinragen. Dadurch werden bei einer Relativbewegung des Kugelkäfigs 1 relativ zu den Führungsschlitten 16 und zu dem Führungswagen 12 Schmutzpartikel aus den Führungsnuten 17-1 des Führungswagens und den weiteren Führungsnuten 17-2 des Führungsschlittens herausgeräumt. Dieser Säuberungseffekt der Führungsnuten 17-1, 17-2 ist besonders effektiv, wenn die Ausbuchtungen 18 derart ausgebildet sind, dass sie die Führungsnuten 17-1, 17-2 so weit wie möglich ausfüllen ohne diese zu berühren. Dadurch wird ein maximal möglicher Säuberungseffekt bei gleichzeitig verminderter Reibung erzielt.

Wie anhand der Figur 5a deutlich wird, verfügt die erfindungsgemäße Flachführung 11 erste Begrenzungsmittel 19-1 und zweite Begrenzungsmittel 19-2. Die ersten Begrenzungsmittel 19-1 begrenzen die Verschiebung des Führungsschlittens 16 relativ zu dem Kugelkäfig 1 auf eine erste Endlage. Dies wird im Ausführungsbeispiel dadurch realisiert, dass das Bodenteil 14 des Kugelkäfigs 1 eine Aussparung 20 aufweist (siehe Figuren 1a und 1c) und eine in dem Führungsschlitten 16 ausgebildete Bohrung 21 einen Metallstift 22 enthält, welcher bei zusammengebauter Flachführung 11 in die Aussparung 20 des Kugelkäfigs 1 (siehe Figur 1a) eintaucht und bei Erreichen der ersten Endlage gegen das Bodenteil 14 stößt. Das Bodenteil 14 wirkt daher als Anschlag für den Metallstift 22 in der ersten Endlage. Durch das erste Begrenzungsmittel 19-1 kann der Weg bzw. der Hub, um den der Führungsschlitten 16 relativ zu dem Kugelkäfig 1 bewegt werden kann, zu beiden Seiten in Verschieberichtung begrenzt werden. Damit kann auch bestimmt werden, wie viele Kugeln 8-1, 8-2 in der ersten Endlage nicht in Kontakt mit dem Führungsschlitten 16 stehen. Dann müssten nur diejenigen Aufnahmen 3,5, in welchen diese Kugeln 8-1, 8-2 aufgenommen sind, auf Seiten des Führungsschlittens Rückhaltemittel 10 aufweisen.

Die zweiten Begrenzungsmittel 19-2 begrenzen die Verschiebung des Kugelkäfigs 1 relativ zu dem Führungswagen 12 auf eine zweite Endlage. Die zweiten Begrenzungsmittel 19-2 sind dadurch realisiert, dass eine im Führungswagen 12 ausgebildete weitere Bohrung 23 einen weiteren Metallstift 24 aufnimmt, welcher ebenfalls in die Aussparung 20 im Bodenteil 14 des Kugelkäfigs 1 hineinragt. Beim Verschieben des Kugelschlittens relativ zum Führungswagen 12 stößt der weitere Metallstift 22 bei Erreichen der zweiten Endlage an das Bodenteil 14 des Kugelkäfigs 1. Auch in diesem Fall wirkt das Bodenteil 14 des Kugelkäfigs 1 als Anschlag für den weiteren Metallstift 24 bei Einnahme der zweiten Endlage. Analog zum ersten Begrenzungsmittel 19-1 wird dadurch die Verfahrstrecke bzw. der Hub, um den der Kugelkäfig 1 relativ zu dem Führungswagen 12 in Verschieberichtung bewegt werden kann, begrenzt. Dadurch wird auch bestimmt, wie viele Kugeln 8-1, 8-2 des Kugelkäfigs 1 bei Einnahme der zweiten Endlage nicht in Kontakt mit dem Führungswagen 12 stehen. Dann müssten nur diese Kugeln 8-1, 8-2 aufnehmenden Aufnahmen 3,5 auf Seiten des Führungswagens 12 Rückhaltemittel 10 aufweisen.

Die ersten und zweiten Begrenzungsmittel 19-1,19-2 dienen insbesondere dazu, die Verfahrstrecke des Führungsschlittens 16 relativ zum Kugelkäfig 1 und die Verfahrstrecke des Kugelkäfigs 1 relativ zu dem Führungswagen 12 so weit zu begrenzen, dass selbst bei Einnahme der ersten und zweiten Endlage die Flachführung 11 eine ausreichende seitliche Stabilität aufweist.

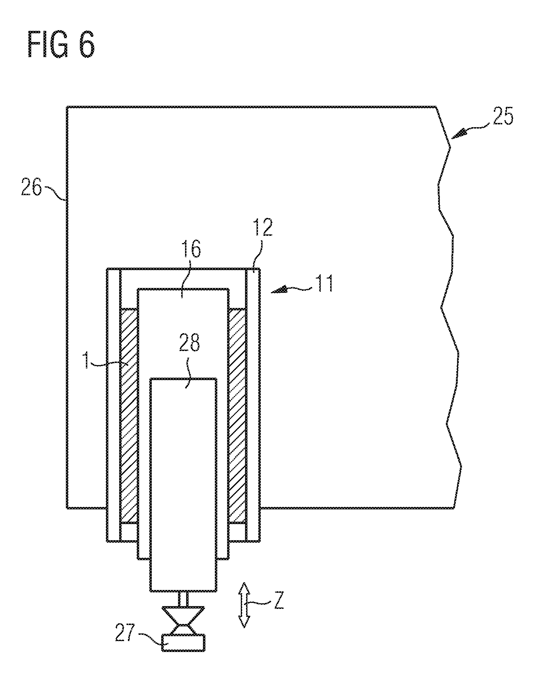

In Figur 6 ist ein Ausführungsbeispiel eines erfindungsgemäßen Bestückkopfes 25 schematisch dargestellt. Ein derartiger Bestückkopf 25 wird beispielsweise in einem Bestückautomaten (nicht dargestellt) zum Bestücken von Substraten mit elektrischen Bauteilen 27 verwendet. Dazu weist der Bestückkopf 25 ein Gehäuse 26 und mindestens einen Greifer 28 zum Handhaben der elektrischen Bauteile 27 auf. Die elektrischen Bauteile 27 werden dabei von dem Greifer 28 des Bestückkopfes 25 in einem Zuführbereich des Bestückautomaten aufgenommen, woraufhin der Bestückkopf 25 mittels eines geeigneten Positioniersystems (nicht dargestellt) in einen Bestückbereich verfahren wird, in dem die zu bestückenden Substrate (nicht dargestellt) bereitgestellt werden, und wo die elektrischen Bauteile 27 von den Greifern auf dem Substrat abgesetzt werden. Zum Handhaben der Bauteile 27, d.h. zum Aufnehmen oder Absetzen der Bauteile 27, muss der Greifer 28 relativ zum Bestückkopf 25 in einer Bestückrichtung (in Figur 6 als Pfeil z dargestellt) bewegbar sein. Dies wird beim erfindungsgemäßen Bestückkopf 25 dadurch realisiert, dass der Greifer 28 mit einer erfindungsgemäßen Flachführung 11 derart gekoppelt ist, dass er in Verschieberichtung der Flachführung 11 (in diesem Fall ist die Verschieberichtung gleich der Bestückrichtung) verfahrbar ist.

Durch Verwendung der erfindungsgemäßen Flachführung 11 in dem Bestückkopf 25 kann der Bauraum für die Flachführung 11 klein gehalten werden, wodurch der Bestückkopf 25 insgesamt kompakter konstruiert werden kann. Gleichzeitig kann der Greifer 28 um einen größeren Hub verfahren werden, als dies bei vergleichbaren, aus dem Stand der Technik bekannten Flachführungen bei gleichem Einbauraum möglich wäre.

### Bezugszeichenliste

- 1: Kugelkäfig
- 2: Erste Wand
- 3: Aufnahmen
- 4: Zweite Wand
- 5: Weitere Aufnahmen
- 6-1: Öffnungen
- 6-2: Weitere Öffnungen
- 7-1: Durchgangsloch
- 7-2: Weiteres Durchgangsloch
- 8-1: Kugeln
- 8-2: Weitere Kugeln
- 9: Innenbereich
- 10: Rückhaltemittel
- 11: Linear-Flachführung
- 12: Führungswagen
- 13: Erster Aufnahmeraum
- 14: Bodenteil
- 15: Zweiter Aufnahmeraum
- 16: Führungsschlitten
- 17-1: Führungsnuten
- 17-2: Weitere Führungsnuten
- 18: Ausbuchtungen
- 19-1: Erste Begrenzungsmittel
- 19-2: Zweite Begrenzungsmittel
- 20: Aussparung
- 21: Bohrung
- 22: Metallstift
- 23: Weitere Bohrung
- 24: Weiterer Metallstift
- 25: Bestückkopf
- 26: Gehäuse
- 27: Bauteil
- 28: Greifer

## Patentansprüche

1. Kugelkäfig (1) für eine Linear-Flachführung (11) mit einem Führungswagen (12) und einem Führungsschlitten (16), welche relativ zueinander in einer Verschieberichtung verschiebbar sind, wobei
- der Kugelkäfig (1) eine erste Wand (2) mit zumindest zwei Aufnahmen (3) für je eine Kugel (8-1) aufweist, wobei jede Aufnahme (3) zwei in der ersten Wand (2) ausgebildete Öffnungen (6-1) und ein die Öffnungen (6-1) verbindendes Durchgangsloch (7-1) aufweist und derart ausgebildet ist, dass eine in der Aufnahme (3) angeordnete Kugel (8-1) aus beiden Öffnungen (6-1) herausragt,
- der Kugelkäfig (1) derart ausgebildet ist, dass er so zwischen dem Führungswagen (12) und dem Führungsschlitten (16) angeordnet werden kann, dass die Aufnahmen (3) in der Verschieberichtung hintereinander liegen und darin angeordnete Kugeln (8-1) jeweils mit dem Führungswagen (12) und dem Führungsschlitten (16) in Kontakt stehen, sodass das Verschieben des Führungsschlittens (16) relativ zum Führungswagen (12) unter Drehung der Kugeln (8-1) geschieht, und
- zumindest eine der Aufnahmen (3) Rückhaltemittel (10) aufweist, welche eine in der Aufnahme angeordnete Kugel (8-1) zumindest auf Seiten einer der beiden Öffnungen (6-1) am Herausfallen hindern.

2. Kugelkäfig (1) nach Anspruch 1, welcher elastisches Material aufweist, wobei das Durchgangsloch (7-1) jeder Aufnahme einen Innenbereich (9), welcher sich zwischen den beiden Öffnung (6-1) der jeweiligen Aufnahme (3) befindet und in dem eine darin angeordnete Kugel (8-1) frei drehbar ist, aufweist, und wobei zumindest eine Öffnung (6-1) derjenigen Aufnahmen (3), welche Rückhaltemittel (10) aufweisen, so schmal ausgebildet sind, dass die in der Aufnahme (3) angeordnete Kugel (8-1) diese Öffnung (6-1) nur unter elastischer Deformation des diese Öffnung (6-1) umgebenden elastischen Materials durchqueren kann.

3. Kugelkäfig (1) nach Anspruch 2, wobei der Kugelkäfig (1) als Spritzgussteil aus Kunststoff gefertigt ist.

4. Kugelkäfig (1) nach Anspruch 1, welcher starres Material aufweist, wobei das Durchgangsloch (7-1) jeder Aufnahme (3) einen Innenbereich (9), welcher sich zwischen den beiden Öffnung (6-1) der jeweiligen Aufnahme (3) befindet und in dem eine darin angeordnete Kugel (8-1) frei drehbar ist, aufweist, und wobei jeweils eine Öffnung (6-1) derjenigen Aufnahmen (3), welche Rückhaltemittel (10) aufweisen, so schmal ausgebildet ist, dass die in der Aufnahme (3) angeordnete Kugel (8-1) diese Öffnung (6-1) nicht durchqueren kann.

5. Kugelkäfig (1) nach einem der Ansprüche 1 bis 4, wobei ein Querschnitt der ersten Wand (2) seitliche Ausbuchtungen (18) aufweist und derart ausgebildet ist, dass der Kugelkäfig (1) so zwischen dem Führungswagen (12) und dem Führungsschlitten (16) angeordnet werden kann, dass die Ausbuchtungen (18) in Führungsnuten (17-1) zur Führung der Kugeln (8-1) auf Seiten des Führungswagens (12) und weitere Führungsnuten (17-2) (17-1) zur Führung der Kugeln (8-1) auf Seiten des Führungsschlittens (16) hineinragen, ohne den Führungswagen (12) oder den Führungsschlitten (16) zu berühren.

6. Kugelkäfig (1) nach einem der Ansprüche 1 bis 4, wobei
- der Kugelkäfig (1) derart ausgestaltet ist, dass er in einem von dem Führungswagen (12) ausgebildeten ersten Aufnahmeraum (13) angeordnet werden kann,
- der Kugelkäfig (1) eine zweite Wand (4) aufweist, welche zumindest zwei weitere Aufnahmen (5) für je eine weitere Kugel (8-2) aufweist, wobei jede der weiteren Aufnahmen (5) zwei in der zweiten Wand (4) ausgebildete weitere Öffnungen (6-2) und ein die weiteren Öffnungen (6-2) verbindendes weiteres Durchgangsloch (7-2) aufweist und derart ausgebildet ist, dass eine in der weiteren Aufnahme (5) angeordnete weitere Kugel (8-2) aus beiden weiteren Öffnungen (6-2) herausragt,
- der Kugelkäfig (1) einen zweiten Aufnahmeraum (15) zur Aufnahme des Führungsschlittens (16) aufweist, welcher durch die erste Wand (2) und die zweite Wand (4) begrenzt ist,
- der Kugelkäfig (1) derart ausgebildet ist, dass er so zwischen dem Führungswagen (12) und dem Führungsschlitten (16) angeordnet werden kann, dass die Aufnahmen (3) der ersten Wand (2) und die weiteren Aufnahmen (5) der zweiten Wand (4) jeweils in der Verschieberichtung hintereinander liegen und die in den Aufnahmen (3) der ersten Wand (2) angeordneten Kugeln (8-1) und die in den weiteren Aufnahmen (5) der zweiten Wand (4) angeordneten weiteren Kugeln (8-2) jeweils mit dem Führungswagen (12) und dem Führungsschlitten (16) in Kontakt stehen, sodass das Verschieben des Führungsschlittens relativ zum Führungswagen (12) unter Drehung der Kugeln (8-1) und der weiteren Kugeln (8-2) geschieht,
- zumindest jeweils eine der Aufnahmen (3) und der weiteren Aufnahmen (5) Rückhaltemittel (10) aufweisen, welche die in der Aufnahme (3) und der weiteren Aufnahme (5) jeweils angeordneten Kugeln (8-1) und weiteren Kugeln (8-2) zumindest auf der Seite einer der Öffnungen (6-1) und weiteren Öffnungen (6-2) am Herausfallen hindern.

7. Kugelkäfig (1) nach Anspruch 6, wobei ein erster Querschnitt der ersten Wand (2) und ein zweiter Querschnitt der zweiten Wand (4) jeweils seitliche Ausbuchtungen (18) aufweisen und derart ausgebildet sind, dass der Kugelkäfig (1) so zwischen dem Führungswagen (12) und dem Führungsschlitten (16) angeordnet werden kann, dass die Ausbuchtungen (18) in Führungsnuten (17-1) zur Führung der Kugeln (8-1) auf Seiten des Führungswagens und weiteren Führungsnuten (17-2) zur Führung der Kugeln (8-1) auf Seiten des Führungsschlittens (16) hineinragen, ohne den Führungswagen (12) oder den Führungsschlitten (16) zu berühren.

8. Flachführung (11) mit einem Führungswagen (12), einem Führungsschlitten (16) und einem Kugelkäfig (1) nach einem der Ansprüche 1 bis 5 mit in den Aufnahmen (3) des Kugelkäfigs (1) angeordneten Kugeln (8-1), wobei der Kugelkäfig (1) mit den in den Aufnahmen (3) angeordneten Kugeln (8-1) derart zwischen dem Führungswagen (12) und dem Führungsschlitten (16) angeordnet ist, dass zumindest eine Kugel (8-1) mit dem Führungswagen (12) und dem Führungsschlitten (16) in Kontakt steht, sodass der Führungsschlitten (16) relativ zum Führungswagen (12) unter Drehung der mindestens einen Kugel (8-1) in der Verschieberichtung verschiebbar ist, und dass die Aufnahmen (3) in der Verschieberichtung hintereinander liegen.

9. Flachführung (11) nach Anspruch (8), mit ersten Begrenzungsmitteln (19-1), welche eine Verschiebung des Führungsschlittens relativ zu dem Kugelkäfig (1) auf eine erste Endlage begrenzen.

10. Flachführung (11) nach Anspruch 9, wobei bei Einnahme der ersten Endlage durch den Kugelkäfig (1) ein Teil der Kugeln (8-1) nicht in Kontakt mit dem Führungsschlitten (16) steht und zumindest die Aufnahmen (3), in welchen diese Kugeln (8-1) angeordnet sind, auf Seiten der dem Führungsschlitten (16) zugewandten Öffnung (6-1) die Rückhaltemittel (10) aufweisen.

11. Flachführung (11) nach einem der Ansprüche 9 bis 10, wobei bei Einnahme der ersten Endlage durch den Kugelkäfig (1) ein Teil der Kugeln (8-1) nicht in Kontakt mit dem Führungswagen (12) stehen und zumindest die Aufnahmen (3), in welchen diese Kugeln (8-1) angeordnet sind, auf Seiten der dem Führungswagen (12) zugewandten Öffnung (6-1) die Rückhaltemittel (10) aufweisen.

12. Flachführung (11) nach einem der Ansprüche 9 bis 11, mit zweiten Begrenzungsmitteln (19-2), welche eine Verschiebung des Kugelkäfigs (1) relativ zu dem Führungswagen (12) bis zu einer zweiten Endlage begrenzt.

13. Flachführung (11) nach Anspruch (12), wobei bei Einnahme der zweiten Endlage durch den Kugelkäfig (1) ein Teil der Kugeln (8-1) nicht in Kontakt mit dem Führungsschlitten (16) stehen und zumindest die Aufnahmen (3), in welchen diese Kugeln (8-1) angeordnet sind, auf Seiten der dem Führungsschlitten (16) zugewandten Öffnung (6-1) die Rückhaltemittel (10) aufweisen.

14. Flachführung (11) nach einem der Ansprüche 12 bis 13, wobei bei Einnahme der zweiten Endlage durch den Kugelkäfig (1) ein Teil der Kugeln (8-1) nicht in Kontakt mit dem Führungswagen (12) stehen und zumindest die Aufnahmen (3), in welchen diese Kugeln (8-1) angeordnet sind, auf Seiten der dem Führungswagen (12) zugewandten Öffnung (6-1) die Rückhaltemittel (10) aufweisen.

15. Bestückkopf (25) zum Bestücken von Substraten mit elektrischen Bauteilen (27), mit
- einem Gehäuse (26),
- mindestens einer Flachführung (11) nach einem der Ansprüche 8 bis 14, welche an dem Gehäuse (26) angeordnet ist, und
- mindestens einem Greifer (28) zum Handhaben der Bauteile (27), welcher mit der Flachführung (11) derart gekoppelt ist, dass er relativ zu dem Gehäuse (26) in der Verschieberichtung verschiebbar ist.
